# EUROPEAN PATENT APPLICATION

(11) **EP 1 742 208 A1**
(43) Date of publication of application: **10.01.2007**
(21) Application number: 05105809.7
(22) Date of filing: 29.06.2005
(51) Int. Cl.: G11B 7/09

(54) **Pickup for optical recording media and device having the pickup**

(71) Applicant: DEUTSCHE THOMSON-BRANDT GMBH, 78048 Villingen-Schwenningen (DE)
(72) Inventor: Bammert, Michael, 78739 Hardt (DE); Suzuki, Tsuneo, 78087 Mönchweiler (DE); Dupper, Rolf, 78050 Villingen-Schwenningen (DE)
(74) Representative: Thies, Stephan

(57) **Abstract**

The invention refers to a pickup (9) for optical recording media having information tracks in a layer, and to a device for accessing optical recording media having such pickup (9). The pickup (9) has a focusing servo for position control in a focus direction (F) orthogonal to the layer, and a movable actuator (1) suspended by suspension wires (3) with a focussing coil divided into two partial coils (41, 42) stacked in focus direction (F) interacting with a magnet (6). In order to allow for a more compact design, a top partial coil (41) is located above the topmost suspension wires (3).

## Description

### Field of the invention

The present invention relates to a pickup for optical recording media, in particular to a mechanical layout thereof, and to a device for accessing optical recording media having the pickup.

### Background of the invention

In apparatus to read from or write to optical recording media having information tracks, a pickup is employed to access locations of the recording medium. For following the information tracks, the medium and the pickup are being moved relative to each other. In the pickup, typically, one or more light beams are generated, are focused onto a target spot on a layer within the medium, and when reading the medium, one or more readout beams coming from the target spot are projected onto a photodetector, where they are converted into electrical signals for further evaluation.

The medium mounted in the apparatus and moved relative to the pickup may have position error in that the target spot varies relative to and around the nominal position. The position error may occur within the layer in a direction at least substantially diagonal or perpendicular to the information tracks where it is often called tracking error, the direction correspondingly being called tracking direction; it also may occur in a direction at least substantially perpendicular to the layer where it is often called focus error, the direction correspondingly being called focus direction; or it occurs in the form that the orientation of the medium relative to the pickup deviates from a nominal orientation, which form is often called tilt error. A direction which is orthogonal both to the tracking direction as well as to the focusing direction will be called information direction in the following, because it is the direction of the tangent to the information track in the target spot.

To keep the light beam focused on the target spot and to keep the readout beam on the photodetector, optical media pickups typically have a so-called actuator. The actuator, typically, has a movable part carrying a lens, which is positioned by magnets interacting with coils onto which electrical currents are imposed. A so-called tracking servo loop controls the position of the movable part in the tracking direction, a so-called focus servo loop controls the position of the movable part in the focus direction, and for some pickups a so-called tilt servo loop controls the angle of the readout beam which in turn influences the incidence of the readout beam onto the photodetector. The tracking direction and the focus direction together span a plane of motion, in which the focussing, tracking and tilt motions take place. The movable part of the actuator is typically suspended by elastic suspension wires which are oriented in parallel and in the information direction, i.e. at right angle to the plane of motion.

JP 2003-173556 A shows a pickup for optical recording media with a tracking servo for position control in a tracking direction and with a focus servo for position control in a focus direction, where a focus coil is subdivided into two coils stacked in the focus direction. The pickup has a movable actuator with coils interacting with magnets.

### Invention

An actuator as described, can be seen to have the drawback that bringing a light beam generating laser diode and a photodetector into the optical path underneath the lens requires additional space, thus increasing the dimension of the pickup in focus direction. A problem to be solved by the invention is to propose a pickup with an actuator that is improved in this regard.

A pickup according to the invention is provided with a subdivided or split focus coil where an upper partial focus coil is located in focus direction above the topmost suspension wires. This has the advantage that the upper partial focus coil uses an otherwise unused area, namely the space around or in the vicinity of the lens, so that remaining elements of the actuator can be arranged more compactly.

Advantageously, in such a pickup, a lower partial focus coil is located in focus direction between the topmost and the bottommost suspension wire. This has the advantage that by cutting out a bottom side part of the actuator body, the space underneath the lens can be widely connected to a space on the side of it. Using a 45 degree mirror, such an opening allows a pickup design that is very flat in focus direction.

Advantageously, the upper partial focus coil is so arranged that at least part of the lens intersects with its volume, i.e. is located within the upper partial focus coil. This has the advantage that the space around the lens is used for useful elements to a maximum possible extent, creating a potential for space savings in other places of the pickup.

Independent of the relative position of the partial focus coils and the suspension wires, a magnet is advantageously placed or located such that an upper end of the magnet side facing the coils is in the vicinity of the upper partial focus coil, and a corresponding lower end is in the vicinity of the lower partial focus coil. This has the advantage that the partial focus coils are facing the magnet at a location where the magnetic field typically is stronger than in the middle of the magnet. This improves the efficiency or sensitivity of the actuator, and is not exploited in conventional designs. By deliberately placing the windings of a coil where the magnetic field is strongest, and by avoiding to place windings where the field is known to be weaker, the efficiency of the magnet coil interaction is improved.

A device according to the invention is a device for accessing optical recording media that has a pickup as described herein.

Exemplary embodiments of the invention are illustrated in the drawings and are explained in more detail in the following description. They refer to the recording medium being an optical disk and to the readout beam being a reflected beam. Despite this, it is clear to those in the art that the invention can be employed on any kind of optical recording medium having information tracks in layers, like those in card or tape form; and regardless whether the readout principle is of a reflective or of a transductive type.

### Brief description of drawings

- Fig. 1: shows a perspective view of parts of a pickup according to the invention;

- Fig. 2: shows the actuator of the pickup of Fig. 1, with suspension wires and magnets;
- Fig. 3: shows the actuator of Fig. 3, with the magnets;
- Fig. 4: shows a different perspective view of actuator and magnets of Fig. 4;
- Fig. 5: shows a perspective view of an actuator according to the invention, with tracking and focus coils;
- Fig. 6: shows a cross section through the actuator, with the magnetic field strength indicated.

### Detailed description of preferred embodiments

A common type of optical recording media is optical disk. In optical disk media, information tracks are shaped as spirals or concentric circles. In pickups for optical disks, motion of the medium relative to the pickup is achieved by rotating the disk, for example by a so-called spindle motor, and by moving the pickup in a radial direction relative to the centre of the disk, for example by a step motor or a threaded spindle or an equivalent linear positioning device of the art.

In a pickup with an optical disk, the tracking direction corresponds to the radial direction, and the focus direction corresponds to an axial direction parallel to the rotation axis of the disk.

In the following description, a reflective optical disk is assumed, where the readout beam corresponds to the reflected light beam resulting from the incident light beam being reflected by an outer or inner surface or layer of the disk.

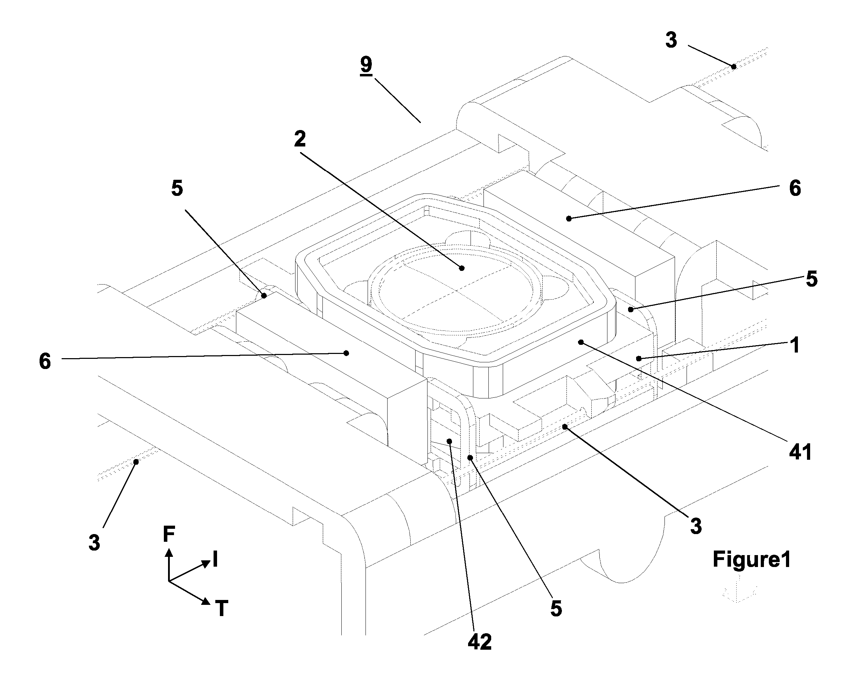

Fig. 1 shows a perspective view of part of a pickup 9 according to the invention. The pickup 9 has an actuator 1 carrying a lens 2, suspended by suspension wires 3, having an upper partial focus coil 41 and a lower partial focus coil 42. Tracking coils 5 are partly visible. To both sides of the actuator, magnets 6 are shown. In this and all following Figures, tracking, focussing and information directions are indicated as T, F, I, respectively.

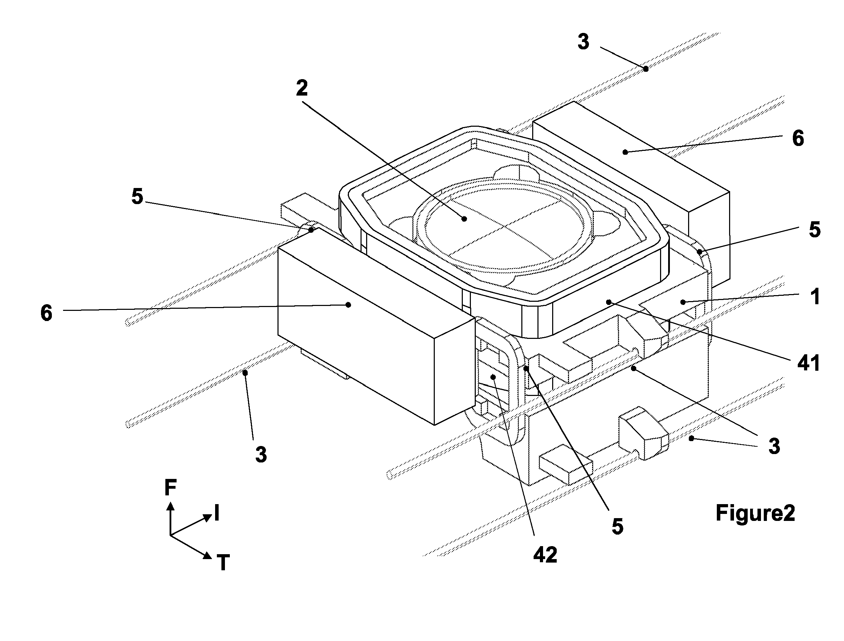

Fig. 2 shows the actuator 1 of the pickup 9 of Fig. 1, with suspension wires 3 and magnets 6. It can be seen that the upper partial focus coil 41 is situated in focus direction F above the topmost suspension wires 3, and the bottom partial focus coil 42 is situated between the topmost and bottommost suspension wires 3.

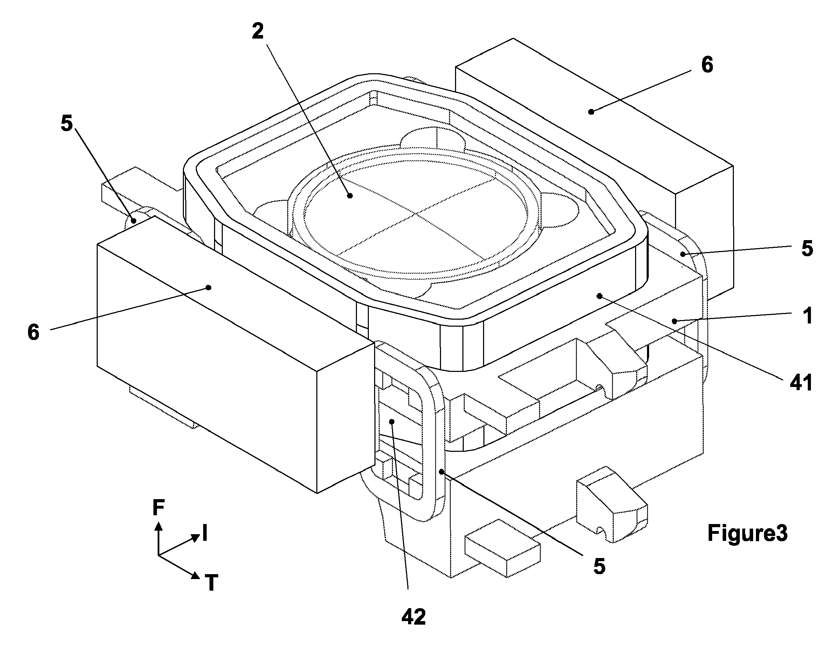

Fig. 3 shows the actuator 1 of Fig. 2, with the magnets 6. Here it can be seen that the upper partial focus coil 41 and the lower partial focus coil 42 are identically shaped and stacked on top of each other in the focus direction F.

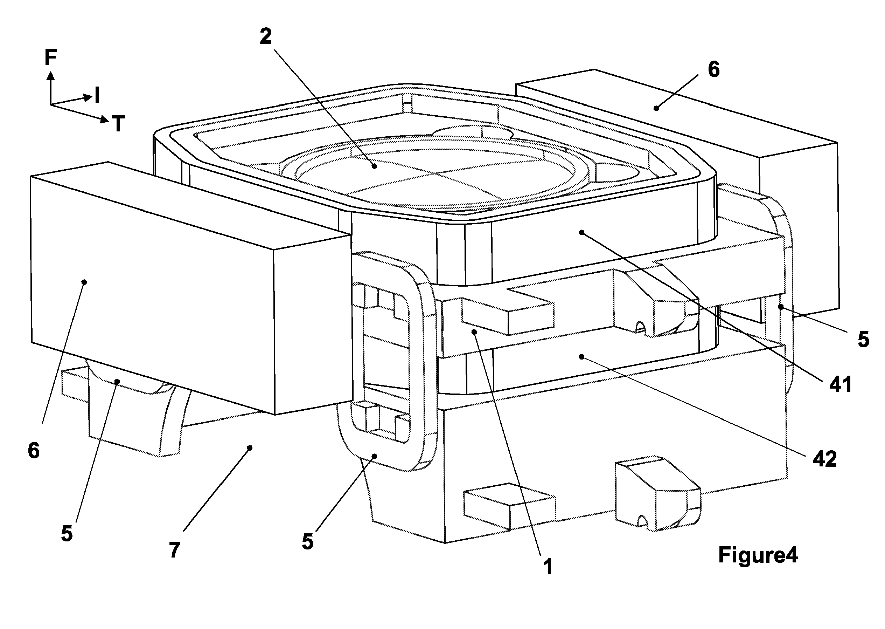

Fig. 4 shows a different perspective view of actuator 1 and magnets 6 of Fig. 3. Here it can be seen that underneath the magnet 6, in focus direction F, a bottom part 7 of the actuator 1 is cut out at its side, so that the space underneath the lens 2 is widely connected to a space on the side of the actuator 1. The Figure also shows that in the actuator 1 the lens 2 is to a large extent, if not entirely, surrounded by the upper partial focus coil 41, which constitutes a major contribution to the flat overall design.

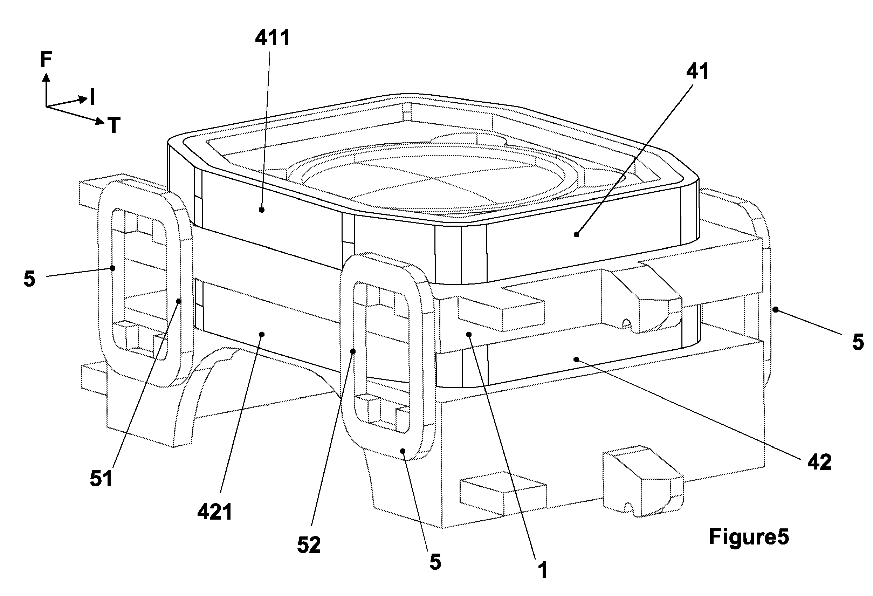

Fig. 5 shows a perspective view of an actuator 1 according to the invention, with tracking coils 5 and focus coils 41, 42. Magnets not being shown, those parts of the coils 5, 41, 42 are visible here, which face the magnet and are covered up by it in the other Figures. Among the tracking coils 5, the right branch 51 of the left tracking coil, and the left branch 52 of the right tracking coil face the magnet. Among the focus coils 41, 42, the branches 411, 421 between the tracking coils 5 face the magnet. In comparison with Figure 4 which shows the magnet 6 in front of the coils, it can be seen that the facing branch 411 of the upper partial focus coil and the facing branch 421 of the lower partial focus coil 42 are close to the upper and lower end of the magnet 6, respectively.

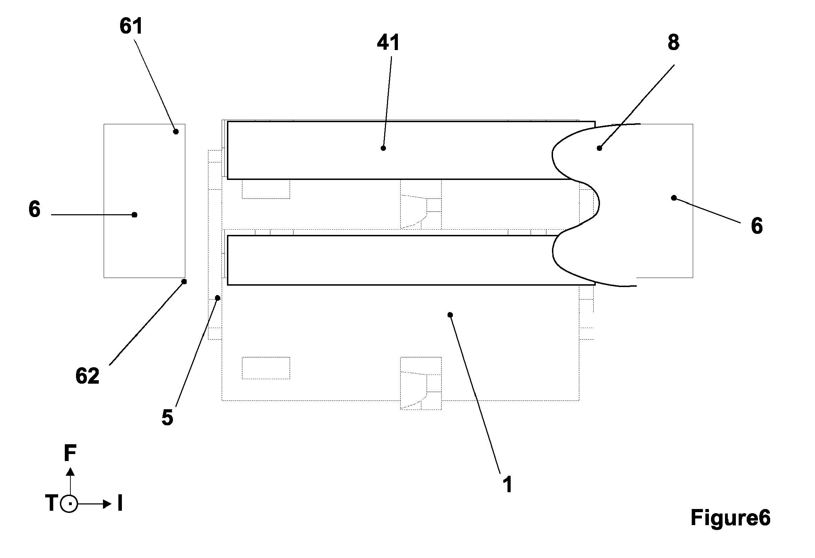

Fig. 6 shows a cross section through the actuator 1, with the magnetic field strength of the magnet 6 indicated as a graph 8. It can be seen that the upper partial focus coil 41 and the lower partial focus coil 42 both are situated close to the maxima in the field strength profile 8. The Figure also confirms that the upper partial focus coil 41 and the lower partial focus coil 42 are close to the upper end 61 and the lower end 62 of the magnet 6, respectively.

## Claims

1. A pickup (9) for optical recording media having information tracks in a layer, the pickup (9) having a focusing servo for position control in a focus direction (F) substantially orthogonal to the layer, the pickup (9) having a movable actuator (1) with a focus coil (41, 42) interacting with a magnet (6), where the actuator (1) is suspended by suspension wires (3), and where the focus coil is divided into an upper partial focus coil (41) and a lower partial focus coil (42) arranged on top of each other in the focus direction (F), with the upper partial focus coil (41) being closer to the storage medium,
**characterized in that** the upper partial focus coil (41) is located in focus direction (F) above the topmost suspension wires (3).

2. The pickup of claim 1, where the lower partial focus coil (42) is located in focus direction (F) between the topmost and the bottommost suspension wires (3).

3. The pickup of claim 1, where at least part of a lens (2) carried by the actuator (1) intersects with a center volume of the upper partial focus coil (41).

4. The pickup of claim 1, where the magnet (6) is located such that, in focus direction (F), its upper end (61) is in the vicinity of the upper partial focus coil (41), and its lower end (62) is in the vicinity of the lower partial focus coil (42).

5. A device for accessing optical recording media, the device **characterised in that** it is provided with a pickup (9) according to one of the previous claims.
